# EUROPEAN PATENT SPECIFICATION

(11) **EP 4 339 725 B1**
(45) Date of publication and mention of the grant of the patent: **16.09.2026**
(21) Application number: 22827593.9
(22) Date of filing: 22.06.2022
(51) Int. Cl.: G05B 23/02, G06F 11/07, G07C 5/08, H04L 12/40, G06F 11/30, G06F 9/54

(54) **DIAGNOSIS SYSTEM AND METHOD FOR VEHICLE CENTRAL CONTROLLER**
DIAGNOSESYSTEM UND -VERFAHREN FÜR EINE FAHRZEUGZENTRALSTEUERUNG
SYSTÈME ET PROCÉDÉ DE DIAGNOSTIC POUR CONTRÔLEUR CENTRAL DE VÉHICULE

(30) Priority: 23.06.2021 CN 202110697531
(43) Date of publication of application: 20.03.2024
(73) Proprietor: China Faw Co., Ltd., Changchun, Jilin 130011 (CN)
(72) Inventor: LI, Yan, Changchun, Jilin 130011 (CN); ZHANG, Xiaoqian, Changchun, Jilin 130011 (CN); TIAN, Xueming, Changchun, Jilin 130011 (CN); LIU, Qi, Changchun, Jilin 130011 (CN)
(74) Representative: Novagraaf Group
(86) International application number: PCT/CN2022/100294
(87) International publication number: WO 2022/268100

(56) References cited:
- WO-A1-2021/043660
- CN-A- 101 097 447
- CN-A- 101 807 068
- CN-A- 103 348 230
- CN-A- 103 348 230
- CN-A- 103 616 886
- CN-A- 104 483 960
- CN-A- 112 904 828
- CN-A- 113 341 933
- CN-U- 201 707 600
- CN-U- 201 740 649
- JP-A- 2013 196 410
- US-A1- 2021 157 902

## Description

### Cross-Reference to Related Application

The disclosure claims priority to Chinese Patent Application No. 202110697531.0 filed to the China National Intellectual Property Administration on June 23, 2021.

### Technical Field

Embodiments of the disclosure relate to technical field of vehicle controllers, for example, to a diagnosis system and method for a vehicle central controller.

### Background

At present, with the development of the intelligent connected vehicle industry and technology, the electronic and electrical architecture of the entire vehicle is also changed from a distributed architecture to a centralized architecture. A bus architecture of a distributed architecture controller unit is gradually evolved into an architectural form that combines a central control unit with a regional communication.

As the electronic and electrical architecture of the entire vehicle develops, a vehicle controller tends to be integrated, the number of the vehicle controllers is also lower than before, and a plurality of application programs with different functions are integrated onto the same hardware controller. In a vehicle controller diagnosis method in the related art, an application program on a controller may be diagnosed, but the plurality of application programs in the controller cannot be diagnosed independently.

Therefore, the following technical problems exist in the related art. The diagnosis efficiency of a vehicle controller is relatively low; and when there are troubles in the plurality of application programs on the controller at the same time, real-time diagnosis of the plurality of application programs cannot be realized in the related art.

WO 2021/043660 A1 discloses an electrical architecture or service-oriented vehicle diagnostics.

US 2021/0157902 A1 discloses a vehicle information communication system.

CN 103348230 A discloses a system and method for recognizing, diagnosing, maintaining and repairing vehicle.

### Summary

The present invention is defined in the appended independent claims.

Further embodiments are set out in the appended dependent claims.

Embodiments of the disclosure provide a diagnosis system and method for a vehicle central controller, to realize synchronization and real-time diagnosis of a plurality of application programs on a vehicle, so as to improve the diagnosis efficiency of a vehicle controller.

According to a first aspect, an embodiment of the disclosure provides a diagnosis system for a vehicle central controller. The diagnosis system includes the vehicle central controller and at least one diagnosis device. The vehicle central controller includes a parallel diagnosis component deployed in a main process, and at least one application component deployed in at least one sub-process.

The at least one diagnosis device is connected to the parallel diagnosis component; the at least one diagnosis device is configured to send, to the parallel diagnosis component, a diagnosis request for diagnosing the application component, wherein the diagnosis request carries a diagnosis identifier.

The parallel diagnosis component is configured to determine, on the basis of the diagnosis identifier, the application component corresponding to the diagnosis request, in response to receiving the diagnosis request sent by the at least one diagnosis device, and transmit, in a Inter-Process Communication manner, the diagnosis request to the application component corresponding to the diagnosis request.

Each application component is configured to process the received diagnosis request, and transmit a processing result of the diagnosis request to the parallel diagnosis component in an IPC manner.

The parallel diagnosis component is further configured to send the processing result to the diagnosis device corresponding to the diagnosis request.

According to a second aspect, an embodiment of the disclosure further provides a diagnosis method for a vehicle central controller. The diagnosis method includes the following operations.

A diagnosis request for diagnosing the application component sent by at least one diagnosis device is received on the basis of a parallel diagnosis component deployed in a main process of the vehicle central controller, wherein the diagnosis request carries a diagnosis identifier.

The parallel diagnosis component determines the application component corresponding to the diagnosis request on the basis of the diagnosis identifier, and transmits, in an IPC manner, the diagnosis request to the application component corresponding to the diagnosis request.

The parallel diagnosis component acquires a processing result of the diagnosis request from the application component in an IPC manner, wherein the processing result of the diagnosis request is obtained by processing the received diagnosis request through the application component.

The parallel diagnosis component sends the processing result to the diagnosis device corresponding to the diagnosis request.

### Brief Description of the Drawings

Fig. 1 is a schematic structural diagram of a diagnosis system for a vehicle central controller according to the invention.
Fig. 2 is a schematic structural diagram of a diagnosis system for a vehicle central controller according to Embodiment II of the disclosure.
Fig. 3 is a schematic structural diagram of a diagnosis system for a vehicle central controller according to Embodiment III of the disclosure.
Fig. 4A is a schematic flowchart of a diagnosis method for a vehicle central controller according to Embodiment IV of the disclosure.
Fig. 4B is a schematic flowchart of another diagnosis method for a vehicle central controller according to Embodiment IV of the disclosure.

### Detailed Description of the Embodiments

The disclosure is described in detail below with reference to the accompanying drawings and embodiments.

### Embodiment I

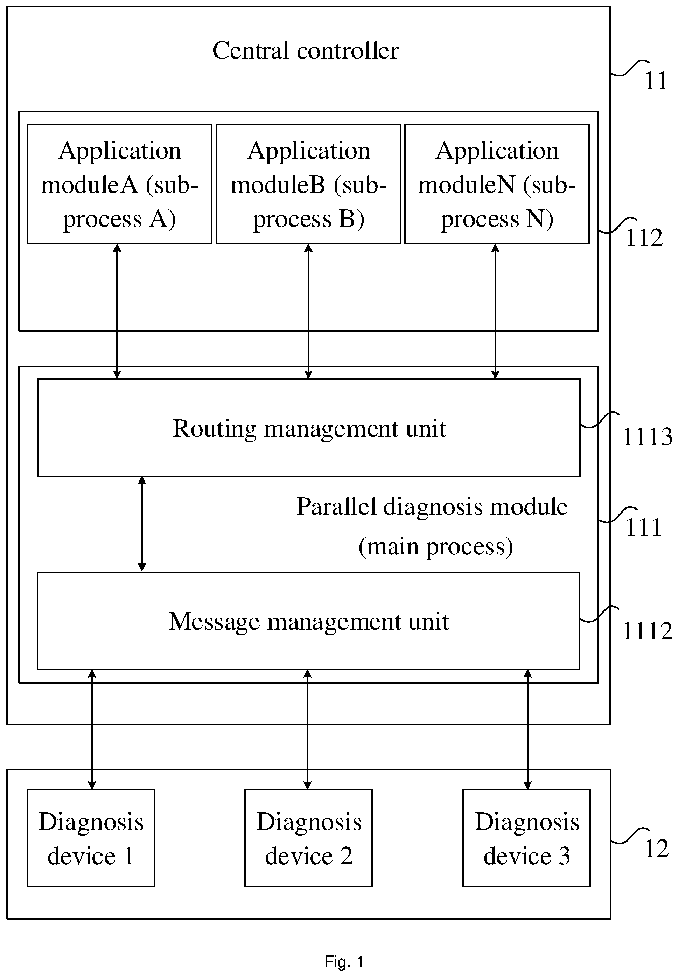

Fig. 1 is a schematic structural diagram of a diagnosis system for a vehicle central controller according to Embodiment I of the disclosure. As shown in Fig. 1, the diagnosis system for a vehicle central controller includes the vehicle central controller 11 and at least one diagnosis device 12. Software involved in the disclosure is implemented in the vehicle central controller 11. The vehicle central controller 11 includes a parallel diagnosis component 111 deployed in a main process, and at least one application component 112 deployed in at least one sub-process. The at least one diagnosis device 12 is connected to the parallel diagnosis component 111. The at least one diagnosis device 12 is configured to send, to the parallel diagnosis component 111, a diagnosis request for diagnosing the application component 112, and the diagnosis request carries a diagnosis identifier. The parallel diagnosis component 111 is configured to determine, on the basis of the diagnosis identifier, the application component 112 corresponding to the diagnosis request, in response to receiving the diagnosis request sent by the at least one diagnosis device 12, and transmit, in an IPC manner, the diagnosis request to the application component 112 corresponding to the diagnosis request. Each application component 112 is configured to process the received diagnosis request, and transmit a processing result of the diagnosis request to the parallel diagnosis component 111 in an IPC manner. The parallel diagnosis component 111 is further configured to send the processing result to the diagnosis device 12 corresponding to the diagnosis request.

In this embodiment, the vehicle central controller 11 may be a controller that is integrated by all Electronic Control Unit (ECU) of a vehicle. Exemplarily, a main control chip of the vehicle central controller is a System on Chip (SOC). The ECUs integrating the vehicle central controller 11 include, but are not limited to, an engine controller unit, an automatic transmission controller unit, a vehicle body controller unit, a vehicle body electronic stability controller unit, a battery management controller unit, and a vehicle controller unit.

The vehicle central controller 11 includes a plurality of ECUs, and each ECU includes at least one application program implementing a corresponding function, such that the vehicle central controller 11 includes a plurality of application programs.

The application component 112 may be an independent diagnosis component of the application program. The application component 112 may monitor the application program, and record trouble information (for example, communication loss trouble information) of the application program. For each application program included in the vehicle central controller 11, the application component 112 for performing independent diagnosis on the application program is provided. The parallel diagnosis component 111 may be a component that is configured to establish interlinkage between the at least one application component 112 and the at least one diagnosis device 12. Exemplarily, in this embodiment, the parallel diagnosis component 111 is deployed in the main process of the vehicle central controller 11, and the application component 112 of the application program is deployed in the at least one sub-process of the vehicle central controller 11, such that the parallel diagnosis component 111 and the at least one application component 112 may transmit data in an IPC manner.

Exemplarily, the diagnosis device 12 in this embodiment is connected to the parallel diagnosis component 111. Optionally, the vehicle central controller 11 is deployed with a Controller Area Network (CAN) interface and/or an Ethernet communication interface. The diagnosis device 12 may be connected to the parallel diagnosis component 111 through a CAN bus, or is connected to the parallel diagnosis component 111 through Ethernet. Exemplarily, there is a transmission layer protocol stack of Diagnostic communication over Internet Protocol (DoIP) and Unified Diagnostics Services on CAN (UDS-on-CAN) in the parallel diagnosis component 111, supporting the external diagnosis device 12 to perform Unified Diagnostic Services (UDS) on the plurality of ECUs of the vehicle central controller 11 through different buses.

Optionally, the vehicle central controller 11 further includes a communication driving component; and the at least one diagnosis device 12 is connected to the parallel diagnosis component 111 through the communication driving component. The communication driving component may be a component that connects the diagnosis device 12 and the parallel diagnosis component 111. In an implementation, the communication driving component may belong to a Board Support Package (BSP) portion.

In an implementation, the communication driving component includes a CAN bus communication driving component; and the at least one diagnosis device 12 is connected to the parallel diagnosis component 111 through the CAN bus communication driving component. In another implementation, the communication driving component includes an Ethernet communication driving component; and the diagnosis device 12 is connected to the parallel diagnosis component 111 through the Ethernet communication driving component.

The diagnosis device 12 may initiate, to the parallel diagnosis component 111, the diagnosis request for diagnosing the application component 112. In an implementation, the plurality of diagnosis devices 12 is connected to the parallel diagnosis component 111, and the diagnosis requests for different application components 112 are sent to the parallel diagnosis component 111 at the same time; and the parallel diagnosis component 111 simultaneously establish interlinkage with the plurality of application components according to the plurality of diagnosis requests.

Exemplarily, the diagnosis device A, the diagnosis device B and the diagnosis device C simultaneously initiate the diagnosis requests for the application component a, the application component b and the application component c to the parallel diagnosis component 111, and in this case, the parallel diagnosis component 111 may respectively establish the interlinkage with the application component a, the application component b and the application component c according to the diagnosis requests.

In another implementation, the diagnosis request initiated by the diagnosis device 12 may aim at the plurality of application components. If the diagnosis device 12 initiates the diagnosis request for the plurality of application components, the parallel diagnosis component 111 may also simultaneously establish the interlinkage with the plurality of application components according to the diagnosis request.

In other words, the parallel diagnosis component 111 in this embodiment may synchronously establish, according to the received diagnosis request, the interlinkage with the plurality of application components corresponding to the diagnosis request. That is, the external diagnosis device 12 may establish a diagnosis communication connection with the application component 112 through the parallel diagnosis component 111.

The diagnosis request initiated by the external diagnosis device 12 needs to follow a certain diagnosis communication protocol requirement, for example, the diagnosis request follows a UDS protocol.

In this embodiment, the diagnosis request includes the diagnosis identifier. The diagnosis identifier may be identifier information that describes a sending party and a receiving party of the diagnosis request. Exemplarily, after receiving at least one diagnosis request, the parallel diagnosis component 111 may determine, according to the diagnosis identifier carried by each diagnosis request, the application component 112 corresponding to each diagnosis request, establish the interlinkage with the application component 112 in an IPC manner, and send each diagnosis request to the application component 112 corresponding to each diagnosis request.

After receiving the diagnosis request transmitted by the parallel diagnosis component 111 on the basis of IPC, each application component 112 processes the diagnosis request, and transmits a processing result to the parallel diagnosis component 111 in an IPC manner. The parallel diagnosis component 111 sends the processing result transmitted by each application component 112 to the diagnosis device 12 corresponding to the diagnosis request, that is, to the diagnosis device 12 of the diagnosis request for the application component 112.

The application component 112 processes the diagnosis request, may read trouble code information (0x19 service), or may also enter diagnosis session control (0x10 service), clear diagnostic information (0x14 service), reset ECU (0x11 service), control the setting of Diagnostic Trouble Codes (DTC) (0x85 service), read data through an Identity (ID) (0x22 service) or write the data through the ID (0x2E service), where ID includes a CAN ID or an Ethernet message ID.

To sum up, the parallel diagnosis component 111 in this embodiment has the following functions: 1, performing data interaction with the external diagnosis device 12, for example, receiving the diagnosis request sent by the external diagnosis device 12, and sending the processing result of the diagnosis request to the external diagnosis device 12; 2, extracting the diagnosis identifier of the received diagnosis request; and 3, performing data interaction with the application component 112, for example, searching the corresponding application component 112 according to the diagnosis identifier carried by the received diagnosis request, sending the diagnosis request to the application component 112, and receiving the processing result of the diagnosis request sent by the application component 112.

Definitely, if the external diagnosis device 12 issues the diagnosis request for a plurality of times to the application component 112 within a set time period, when the diagnosis request is issued for the first time, the diagnosis device 12 establishes a communication connection with the application component 112 through the parallel diagnosis component 111, such that the application component 112 may establish a session with the diagnosis device 12, and maintain the session when a communication is established for the first time; and when the diagnosis request is not issued for the first time, the application component 112 may record, on the basis of the session, a process of performing data interaction with the diagnosis device 12.

The diagnosis system for a vehicle central controller provided in this embodiment includes the vehicle central controller and the at least one diagnosis device. The vehicle central controller includes the parallel diagnosis component deployed in the main process, and the at least one application component deployed in at least one sub-process. The parallel diagnosis component in the main process is configured to establish the interlinkage between each application component on the vehicle central controller and the external diagnosis device; and the application component in the sub-process is configured to diagnose the application program on the sub-process. In the disclosure, the parallel diagnosis component is deployed in the main process; and the independent diagnosis component of each application program is deployed in the sub-process. The parallel diagnosis component is configured to establish a communication between the at least one application component and the at least one external diagnosis device, so as to realize the real-time and synchronous diagnosis of the plurality of application programs on the vehicle central controller, thereby improving the diagnosis efficiency of a controller. In addition, the diagnosis system for a vehicle central controller provided in this embodiment does not need to change the original design of the diagnosis device. After the plurality of ECUs are deployed in the vehicle central controller, the plurality of ECUs may still be independently and synchronously diagnosed according to the original diagnosis device, without depending on the model of a controller chip, such that the diagnosis system has good portability.

In an implementation, the parallel diagnosis component 111 includes a message processing component 1112 and a routing management component 1113. The message processing component 1112 is connected to the at least one diagnosis device 12. The message processing component 1112 is configured to determine the diagnosis identifier of the diagnosis request, in response to receiving the diagnosis request sent by the at least one diagnosis device 12, and send the diagnosis identifier to the routing management component 1113. The routing management component 1113 is configured to determine, on the basis of the diagnosis identifier, the application component 112 corresponding to the diagnosis request, and transmit, in an IPC manner, the diagnosis request to the application component 112 corresponding to the diagnosis request.

In an implementation, the parallel diagnosis component 111 consists of the message processing component 1112 and the routing management component 1113. The message processing component 1112 is configured to extract the diagnosis identifier of the received diagnosis request. The routing management component 1113 is configured to determine the corresponding application component 112 according to the diagnosis identifier, establish, on the basis of an IPC, communication connection with the application component 112 corresponding to the diagnosis request, and transmit the diagnosis request to the application component 112.

The advantage of arranging the message processing component 1112 and the routing management component 1113 in the parallel diagnosis component 111, so as to respectively extract the diagnosis identifier and determine the application component corresponding to the diagnosis identifier lies in that, the communication connection may be established with the plurality of application components at the same time when the plurality of diagnosis requests are received, so as to improve the diagnosis efficiency of the plurality of application components.

Optionally, the application component 112 is further configured to execute at least one of the following operations.

Security access verification is performed on the received diagnosis request, and a verification result of the diagnosis request is transmitted to the parallel diagnosis component 111 in an IPC manner.

A DTC of the application program running in each application component 112 is recorded, and a diagnostic trouble state of the application program running in each application component 112 is maintained.

A session state between the application component 112 and the parallel diagnosis component 111 is recorded.

In an optional implementation, the application component 112 may not only perform diagnosis service request processing, but also perform security access verification, session state management, DTC recording, and diagnostic trouble state maintenance. Due to the constantly changing of the trouble state, including the current trouble and a historical trouble, maintaining the diagnostic trouble state can update the trouble state in real time.

In an implementation, the application component 112 includes a diagnosis processing component and a diagnosis storage component. The diagnosis processing component is configured to execute at least one of the following operations: recording a session state between the application component 112 and the parallel diagnosis component 111; performing security access verification on the received diagnosis request, and transmitting the verification result of the diagnosis request to the parallel diagnosis component 111 in an IPC manner; and processing the received diagnosis request, and transmitting the processing result of the diagnosis request to the parallel diagnosis component 111 in an IPC manner. The diagnosis storage component is configured to record the DTC of the application program running in the application component 112, and maintain the diagnostic trouble state of the application program running in the application component 112. Optionally, the diagnosis processing component is further configured to provide a diagnosis service interface to the application program deployed in the application component. The diagnosis storage component is further configured to provide a diagnosis storage interface to the application program deployed in the application component.

It is to be noted that, in an optional implementation, the diagnosis processing component and the diagnosis storage component of the at least one application component may be implemented by using the same code, but each application component needs to be integrated with the diagnosis processing component and the diagnosis storage component. Diagnosis data (for example, the DTC) of each application component 112 in the entire vehicle central controller 11 may be separately stored. That is to say, diagnostic information of each application component 112 may be respectively stored to a data storage space corresponding to each application component. However, the parallel diagnosis component 111 of the main process may acquire the diagnosis data of each application component 112 through a mechanism of IPC.

In an optional implementation, the application component 112 may also perform session state management, security access verification, DTC recording, and diagnostic trouble state maintenance. Therefore, trouble diagnosis of the plurality of application programs of the vehicle central controller is realized.

### Embodiment II

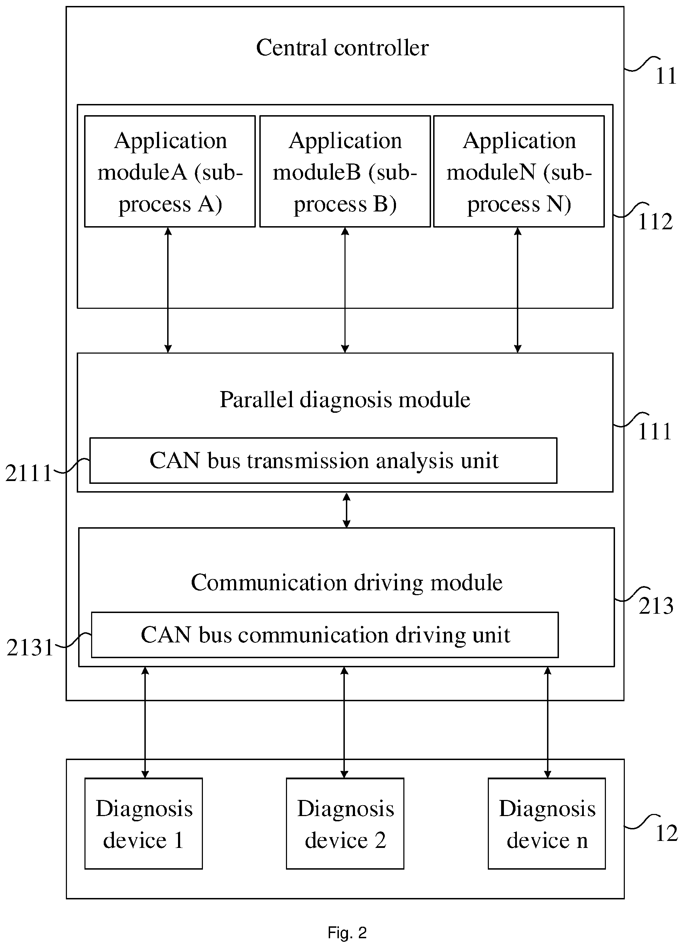

Fig. 2 is a schematic structural diagram of a diagnosis system for a vehicle central controller according to Embodiment II of the disclosure. In this embodiment, on the basis of each embodiment, optionally, the vehicle central controller further includes a communication driving component; and the at least one diagnosis device is connected to the parallel diagnosis component through the communication driving component. Optionally, the communication driving component includes a CAN bus communication driving component; and the at least one diagnosis device is connected to the parallel diagnosis component through the CAN bus communication driving component. Optionally, the diagnosis identifier includes a request message identifier. The parallel diagnosis component includes a CAN bus transmission analysis component. The CAN bus transmission analysis component is configured to analyze the diagnosis request, to acquire the request message identifier of the diagnosis request. The parallel diagnosis component is configured to call the CAN bus transmission analysis component to analyze the diagnosis request, in response to receiving the diagnosis request sent by the at least one diagnosis device on the basis of the CAN bus communication driving component, so as to obtain the request message identifier of the diagnosis request, determine, on the basis of the request message identifier, the application component corresponding to the diagnosis request, and transmit, in an IPC manner, the diagnosis request to the application component corresponding to the diagnosis request.

Exemplarily, as shown in Fig. 2, the diagnosis system for a vehicle central controller provided in this embodiment includes a vehicle central controller 11 and at least one diagnosis device 12. The vehicle central controller 11 includes a parallel diagnosis component 111 deployed in a main process, at least one application component 112 deployed in at least one sub-process, and a communication driving component 213. The communication driving component 213 includes a CAN bus communication driving component 2131. The parallel diagnosis component 111 includes the CAN bus transmission analysis component 2111. The diagnosis device 12 is connected to the parallel diagnosis component 111 through the CAN bus communication driving component 2131. The diagnosis device 12 is configured to send, to the parallel diagnosis component 111, a diagnosis request for diagnosing the application component 112, wherein the diagnosis request carries a diagnosis identifier, and the diagnosis identifier includes the request message identifier. The parallel diagnosis component 111 is configured to call the CAN bus transmission analysis component 2111 to analyze the diagnosis request, in response to receiving the diagnosis request sent by the at least one diagnosis device 12 on the basis of the CAN bus communication driving component 2131, so as to obtain the request message identifier of the diagnosis request, determine, on the basis of the request message identifier, the application component 112 corresponding to the diagnosis request, and transmit, in an IPC manner, the diagnosis request to the application component 112 corresponding to the diagnosis request. Each application component 112 is configured to process the received diagnosis request, and transmit a processing result of the diagnosis request to the parallel diagnosis component 111 in an IPC manner. The parallel diagnosis component 111 is further configured to send the processing result to the diagnosis device 12 corresponding to the diagnosis request.

The request message identifier may be a Controller Area Network Identity Document (CANID). Exemplarily, if the diagnosis device 12 sends the diagnosis request through the CAN bus communication driving component 2131, and the diagnosis identifier of the diagnosis request sent by the diagnosis device 12 is the CANID.

Exemplarily, the parallel diagnosis component 111 in this embodiment may analyze the diagnosis request by calling the CAN bus transmission analysis component 2111, to acquire the request message identifier of the diagnosis request.

According to the technical solution of this embodiment, the diagnosis request sent by the external diagnosis device is received through the CAN bus communication driving component of the communication driving component; the diagnosis request is analyzed by the CAN bus transmission analysis component of the parallel diagnosis component, a diagnosis message data packet portion of the diagnosis request is acquired, and the request message identifier is extracted from the diagnosis message data packet portion, so as to determine the corresponding application component on the basis of the request message identifier; and interlinkage with the application component is established. In this way, the real-time diagnosis of the plurality of application programs on the vehicle central controller at the same time is realized, a communication mechanism of a diagnosis device in the related art does not need to be changed, and a plurality of ECUs may still be independently and synchronously diagnosed according to the diagnosis device in the related art, such that the applicability of the diagnosis system for a vehicle central controller is improved.

### Embodiment III

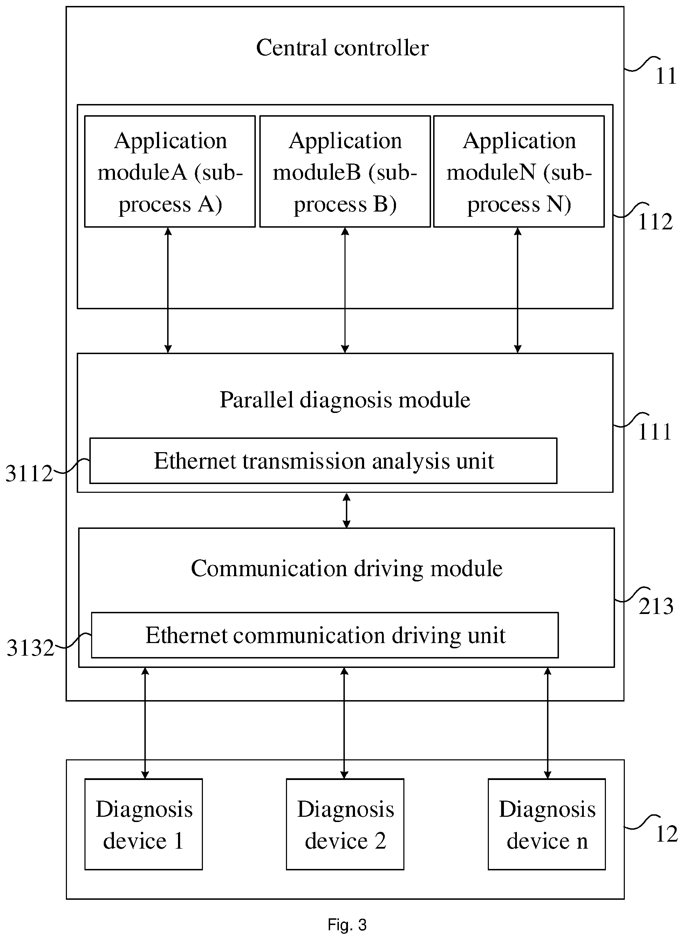

Fig. 3 is a schematic structural diagram of a diagnosis system for a vehicle central controller according to Embodiment III of the disclosure. In this embodiment, on the basis of each embodiment, optionally, the vehicle central controller further includes a communication driving component; and the diagnosis device is connected to the parallel diagnosis component through the communication driving component. Optionally, the communication driving component includes an Ethernet communication driving component; and the at least one diagnosis device is connected to the parallel diagnosis component through the Ethernet communication driving component. Optionally, the diagnosis identifier includes a diagnosis node identifier. The parallel diagnosis component includes an Ethernet transmission analysis component. The Ethernet transmission analysis component is configured to analyze a diagnosis request, and acquire the diagnosis node identifier of the diagnosis request. The parallel diagnosis component is configured to call the Ethernet transmission analysis component to analyze the diagnosis request, in response to is receiving the diagnosis request sent by the at least one diagnosis device on the basis of the Ethernet communication driving component, so as to obtain the diagnosis node identifier of the diagnosis request, determine, on the basis of the diagnosis node identifier, the application component corresponding to the diagnosis request, and transmit, in an IPC manner, the diagnosis request to the application component corresponding to the diagnosis request.

Exemplarily, as shown in Fig. 3, the diagnosis system for a vehicle central controller provided in this embodiment includes a vehicle central controller 11 and at least one diagnosis device 12. The vehicle central controller 11 includes a parallel diagnosis component 111 deployed in a main process, at least one application component 112 deployed in at least one sub-process, and a communication driving component 213. The communication driving component 213 includes the Ethernet communication driving component 3132. The parallel diagnosis component includes the Ethernet transmission analysis component 3112. The diagnosis device 12 is connected to the parallel diagnosis component 111 through the Ethernet communication driving component 3132. The diagnosis device 12 is configured to send, to the parallel diagnosis component 111, the diagnosis request for diagnosing the application component 112, wherein the diagnosis request carries a diagnosis identifier, and the diagnosis identifier includes the diagnosis node identifier. The parallel diagnosis component 111 is configured to call the Ethernet transmission analysis component 3112 to analyze the diagnosis request, in response to receiving the diagnosis request sent by the at least one diagnosis device 12 on the basis of the Ethernet communication driving component 3132, so as to obtain the diagnosis node identifier of the diagnosis request, determine, on the basis of the diagnosis node identifier, the application component 112 corresponding to the diagnosis request, and transmit, in an IPC manner, the diagnosis request to the application component 112 corresponding to the diagnosis request. The application component 112 is configured to process the received diagnosis request, and transmit a processing result of the diagnosis request to the parallel diagnosis component 111 in an IPC manner. The parallel diagnosis component 111 is further configured to send the processing result to the diagnosis device 12 corresponding to the diagnosis request.

The diagnosis node identifier may be an Internet Protocol (IP) address or a port number (IP/PORT). Exemplarily, if the diagnosis device 12 sends the diagnosis request through the Ethernet communication driving component, and the diagnosis identifier of the diagnosis request sent by the diagnosis device 12 is the diagnosis node identifier.

Exemplarily, the parallel diagnosis component 111 in this embodiment may analyze the diagnosis request by calling the Ethernet transmission analysis component 3112, and acquire the diagnosis node identifier of the diagnosis request.

According to the technical solution of this embodiment, the diagnosis request sent by the external diagnosis device is received through the Ethernet communication driving component of the communication driving component; the diagnosis request is analyzed by the Ethernet transmission analysis component of the parallel diagnosis component, a diagnosis message data packet portion of the diagnosis request is acquired, and the diagnosis node identifier is extracted from the diagnosis message data packet portion, so as to determine the corresponding application component on the basis of the diagnosis node identifier; and interlinkage with the application component is established. In this way, the real-time diagnosis of the plurality of application programs on the vehicle central controller at the same time is realized, a communication mechanism of a diagnosis device in the related art does not need to be changed, and a plurality of ECUs may still be independently and synchronously diagnosed according to the diagnosis device in the related art, such that the applicability of the diagnosis system for a vehicle central controller is improved.

Definitely, the communication driving component provided in this embodiment may further include the Ethernet communication driving component and a CAN bus communication driving component; and the parallel diagnosis component also includes the Ethernet transmission analysis component and a CAN bus transmission analysis component.

In an implementation, a diagnosis message determination component may further be deployed in the communication driving component. On the basis of the diagnosis message determination component, before the parallel diagnosis component acquires the diagnosis identifier of the diagnosis request, the diagnosis message determination component determines whether the diagnosis request is a request of a diagnosis message type. That is, optionally, the communication driving component includes the diagnosis message determination component. The diagnosis message determination component is configured to determine whether the diagnosis request of the application component sent by the at least one diagnosis device is the request of the diagnosis message type, and transmit the diagnosis request to the parallel diagnosis component when the diagnosis request of the application component sent by the at least one diagnosis device is the request of the diagnosis message type.

The diagnosis message type may be a preset message type. In an implementation, the diagnosis message type may be set through a preset diagnosis identifier.

Exemplarily, whether the diagnosis request is the request of the diagnosis message type may be determined on the basis of the diagnosis identifier of the diagnosis request. For example, if the diagnosis identifier carried by the diagnosis request is 101, 301 or 401, the diagnosis request is the request of the diagnosis message type.

Exemplarily, the communication driving component may call the CAN bus communication driving component or the Ethernet communication driving component, acquire the diagnosis identifier of the diagnosis request, and determine, on the basis of the diagnosis message determination component, whether the diagnosis request is the request of the diagnosis message type. If the diagnosis request is the request of the diagnosis message type, the diagnosis request is transmitted to the parallel diagnosis component through the communication driving component, so as to cause the parallel diagnosis component to establish interlinkage with the application component corresponding to the diagnosis request, thereby diagnosing the application component.

Optionally, if the diagnosis request is not the request of the diagnosis message type, the diagnosis request is processed on the basis of a non-diagnosis message processing component in the vehicle central controller.

In an optional implementation, whether the diagnosis request is the request of a preset diagnosis message type is determined through the diagnosis message determination component of the communication driving component; and when the diagnosis request is the request of the preset diagnosis message type, the diagnosis request is transmitted to the parallel diagnosis component. Therefore, the filtration of a diagnosis message is realized, a non-preset diagnosis request is prevented from being processed, and the safety of the diagnosis system for a vehicle central controller is improved.

It is to be noted that, components included in the system are only divided according to the functional logic, but are not limited to the above divisions, as long as the corresponding functions can be realized. In addition, the specific names of the functional components are only for the convenience of distinguishing from each other, and are not used to limit the scope of protection of the embodiments of the disclosure.

### Embodiment IV

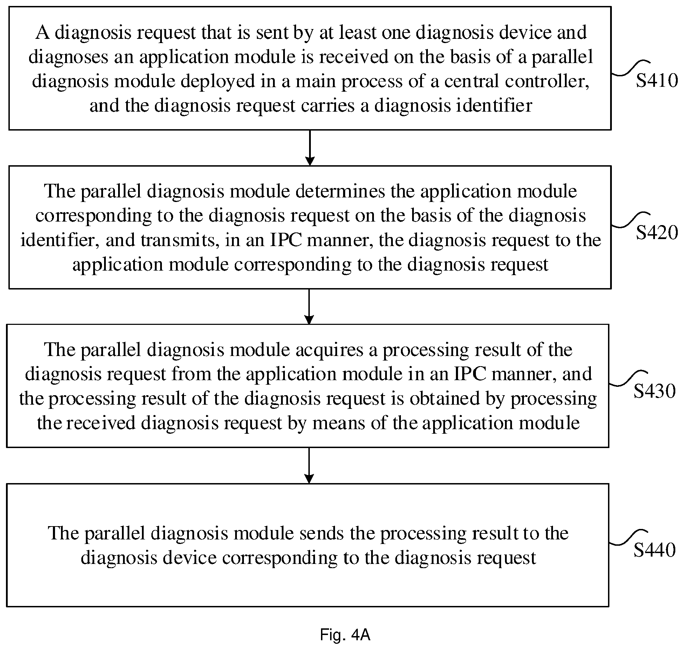

Fig. 4A is a schematic flowchart of a diagnosis method for a vehicle central controller according to Embodiment IV of the disclosure. This embodiment may be suitable for a situation of diagnosing a plurality of application programs in a vehicle central controller, for example, suitable for a situation of diagnosing the plurality of application programs in the vehicle central controller at the same time. The method is suitable for a diagnosis system for a vehicle central controller. The system may be implemented by hardware and/or software. The method includes the following steps.

At S410, a diagnosis request for diagnosing the application component sent by at least one diagnosis device is received on the basis of a parallel diagnosis component deployed in a main process of a vehicle central controller, wherein the diagnosis request carries a diagnosis identifier.

Optionally, the step of receiving, on the basis of a parallel diagnosis component deployed in a main process of a vehicle central controller, a diagnosis request for diagnosing the application component sent by at least one diagnosis device includes: receiving, by the parallel diagnosis component deployed in the main process of the vehicle central controller through a communication driving component of the vehicle central controller, the diagnosis request for diagnosing the application component that is sent by the at least one diagnosis device. Exemplarily, the vehicle central controller further includes the communication driving component; and the diagnosis device is connected to the parallel diagnosis component through the communication driving component.

Optionally, the communication driving component includes a CAN bus communication driving component. Correspondingly, the parallel diagnosis component deployed in the main process of the vehicle central controller receives, through the CAN bus communication driving component, the diagnosis request for diagnosing the application component sent by at least one diagnosis device. Exemplarily, the diagnosis device is connected to the parallel diagnosis component through the CAN bus communication driving component.

Optionally, the communication driving component includes an Ethernet communication driving component. Correspondingly, the parallel diagnosis component deployed in the main process of the vehicle central controller receives, through the Ethernet communication driving component, the diagnosis request for diagnosing the application component sent by at least one diagnosis device. Exemplarily, the diagnosis device is connected to the parallel diagnosis component through the Ethernet communication driving component.

At S420, the parallel diagnosis component determines the application component corresponding to the diagnosis request on the basis of the diagnosis identifier, and transmits, in an IPC manner, the diagnosis request to the application component corresponding to the diagnosis request.

Optionally, the step of determining, by the parallel diagnosis component, the application component corresponding to the diagnosis request on the basis of the diagnosis identifier, and transmitting, in an IPC manner, the diagnosis request to the application component corresponding to the diagnosis request includes: receiving, by a message processing component of the parallel diagnosis component, the diagnosis request sent by the at least one diagnosis device, determining a diagnosis identifier of the diagnosis request, and sending the diagnosis identifier to a routing management component of the parallel diagnosis component; and through the routing management component; of the parallel diagnosis component, determining, on the basis of the diagnosis identifier, the application component corresponding to the diagnosis request, and transmitting, in an IPC manner, the diagnosis request to the application component corresponding to the diagnosis request.

Optionally, the diagnosis identifier includes a request message identifier. The parallel diagnosis component includes a CAN bus transmission analysis component. The step of determining, by the parallel diagnosis component, the application component corresponding to the diagnosis request on the basis of the diagnosis identifier, and transmitting, in an IPC manner, the diagnosis request to the application component corresponding to the diagnosis request includes the following operation.

The parallel diagnosis component calls the CAN bus transmission analysis component to analyze the diagnosis request , in response to receiving the diagnosis request sent by the at least one diagnosis device on the basis of the CAN bus communication driving component, so as to obtain the request message identifier of the diagnosis request, determines, on the basis of the request message identifier, the application component corresponding to the diagnosis request, and transmits, in an IPC manner, the diagnosis request to the application component corresponding to the diagnosis request.

Optionally, the diagnosis identifier includes a diagnosis node identifier. The parallel diagnosis component includes an Ethernet transmission analysis component. The step of determining, by the parallel diagnosis component, the application component corresponding to the diagnosis request on the basis of the diagnosis identifier, and transmitting, in an IPC manner, the diagnosis request to the application component corresponding to the diagnosis request includes the following operation.

The parallel diagnosis component calls the Ethernet transmission analysis component to analyze the diagnosis request, in response to receiving the diagnosis request sent by the at least one diagnosis device on the basis of the Ethernet communication driving component, so as to obtain the diagnosis node identifier of the diagnosis request, determine, on the basis of the diagnosis node identifier, the application component corresponding to the diagnosis request, and transmit, in an IPC manner, the diagnosis request to the application component corresponding to the diagnosis request.

At S430, the parallel diagnosis component acquires a processing result of the diagnosis request from the application component in an IPC manner, wherein the processing result of the diagnosis request is obtained by processing the received diagnosis request through the application component.

Optionally, the method further includes at least one of the followings.

The parallel diagnosis component acquires a verification result of the diagnosis request from the application component in an IPC manner, and the verification result of the diagnosis request is obtained by performing security access verification on the received diagnosis request by the application component.

A DTC of the application program running in the application component is recorded on the basis of the application component, and a diagnostic trouble state of the application program running in the application component is maintained.

A session state between the application component and the parallel diagnosis component is recorded on the basis of the application component.

At S440, the parallel diagnosis component sends the processing result to the diagnosis device corresponding to the diagnosis request.

Optionally, the parallel diagnosis component may send the processing result to the diagnosis device corresponding to the diagnosis request on the basis of the communication driving component. Optionally, the parallel diagnosis component may send the processing result to the diagnosis device corresponding to the diagnosis request on the basis of the CAN bus communication driving component of the communication driving component. Optionally, the parallel diagnosis component may send the processing result to the diagnosis device corresponding to the diagnosis request on the basis of the Ethernet communication driving component of the communication driving component.

Optionally, the method further includes: determining whether the diagnosis request of the application component sent by the at least one diagnosis device is a request of a diagnosis message type, and transmitting the diagnosis request to the parallel diagnosis component when the diagnosis request of the application component sent by the at least one diagnosis device is the request of the diagnosis message type.

According to the technical solution of this embodiment, by performing data interaction between the parallel diagnosis component established in the main process and the external diagnosis device and the application component in the at least one sub-process, the real-time diagnosis of the plurality of application programs on the vehicle central controller at the same time is realized, such that the diagnosis efficiency of the controller is improved. In addition, the original design of the diagnosis device does not need to be changed. After the plurality of ECUs are deployed in the vehicle central controller, the plurality of ECUs may still be independently and synchronously diagnosed according to the original diagnosis device, without depending on the model of a controller chip, such that the diagnosis system has good portability.

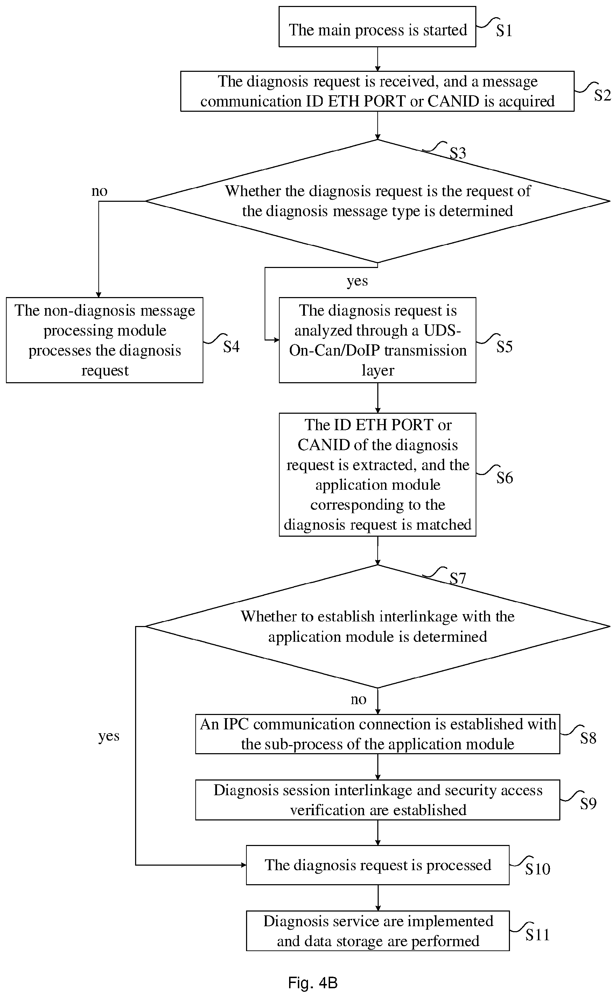

It is to be noted that, this embodiment further provides another diagnosis method for a vehicle central controller, as shown in Fig. 4B. Referring to Fig. 4B, the method includes the following steps.

At S1, the main process is started.

At S2, the diagnosis request is received, and a message communication ID ETH PORT or CANID is acquired.

At S3, whether the diagnosis request is the request of the diagnosis message type is determined; when the diagnosis request is not the request of the diagnosis message type, S4 is executed; and when the diagnosis request is the request of the diagnosis message type, S5 is executed.

At S4, the non-diagnosis message processing component processes the diagnosis request.

At S5, the diagnosis request is analyzed through a UDS-On-Can/DolP transmission layer.

At S6, the ID ETH PORT or CANID of the diagnosis request is extracted, and the application component corresponding to the diagnosis request is matched.

At S7, whether to establish interlinkage with the application component is determined; if so, S10 is executed; and if no, S8 is executed.

At S8, an IPC communication connection is established with the sub-process of the application component.

At S9, diagnosis session interlinkage and security access verification are established.

At S10, the diagnosis request is processed (for example, 0X22, 0X2E, 0X31, ect.)

At S11, diagnosis service are implemented and data storage are performed.

In this implementation, by performing data interaction between the main process and the external diagnosis device and the application component in the at least one sub-process, the real-time diagnosis of the plurality of application programs on the vehicle central controller at the same time is realized, such that the diagnosis efficiency of the controller is improved.

## Claims

1. A diagnosis system for a vehicle central controller comprising the vehicle central controller (11) and at least one diagnosis device (12), wherein the vehicle central controller (11) comprises a parallel diagnosis component (111) deployed in a main process, and at least one application component (112) deployed in at least one sub-process;
the at least one diagnosis device (12) is connected with the parallel diagnosis component (111), and the at least one diagnosis device (12) is configured to send, to the parallel diagnosis component (111), a diagnosis request for diagnosing the application component (112), wherein the diagnosis request carries a diagnosis identifier;
the parallel diagnosis component (111) is configured to determine, on the basis of the diagnosis identifier, the application component (112) corresponding to the diagnosis request, in response to receiving the diagnosis request sent by the at least one diagnosis device (12), and transmit, in an Inter-Process Communication, IPC, manner, the diagnosis request to the application component (112) corresponding to the diagnosis request;
each application component (112) is configured to process the received diagnosis request, and transmit a processing result of the diagnosis request to the parallel diagnosis component (111) in the IPC manner; and
the parallel diagnosis component (111) is further configured to send the processing result to the diagnosis device (12) corresponding to the diagnosis request,
wherein the parallel diagnosis component (111) comprises a message processing component (1112) and a routing management component(1113);
the message processing component (1112) is connected with the at least one diagnosis device (12); the message processing component (1112) is configured to determine the diagnosis identifier of the diagnosis request, in response to receiving the diagnosis request sent by the at least one diagnosis device, and send the diagnosis identifier to the routing management component (1113); and
the routing management component (1113) is configured to determine, on the basis of the diagnosis identifier, the application component (112) corresponding to the diagnosis request, and transmit, in the IPC manner, the diagnosis request to the application component (112) corresponding to the diagnosis request.

2. The system as claimed in claim 1, wherein the vehicle central controller (11) further comprises a communication driving component (213), and the at least one diagnosis device (12) is connected with the parallel diagnosis component (111) through the communication driving component (213).

3. The system as claimed in claim 2, wherein the communication driving component (213) comprises a Controller Area Network (CAN) bus communication driving component(2131), and the at least one diagnosis device (12) is connected with the parallel diagnosis component (111) through the CAN bus communication driving component (2131).

4. The system as claimed in claim 3, wherein the diagnosis identifier comprises a request message identifier, and the parallel diagnosis component (111) comprises a CAN bus transmission analysis component (2111);
the CAN bus transmission analysis component (2111) is configured to analyze the diagnosis request, to acquire the request message identifier of the diagnosis request; and
the parallel diagnosis component (111) is configured to call the CAN bus transmission analysis component (2111) to analyze the diagnosis request, in response to receiving the diagnosis request sent by the at least one diagnosis device (12) on the basis of the CAN bus communication driving component (2131), to obtain the request message identifier of the diagnosis request, and determine, on the basis of the request message identifier, the application component (112) corresponding to the diagnosis request, and transmit, in the IPC manner, the diagnosis request to the application component (112) corresponding to the diagnosis request.

5. The system as claimed in claim 2, wherein the communication driving component (213) comprises an Ethernet communication driving component (3132); and the at least one diagnosis device (12) is connected with the parallel diagnosis component (111) through the Ethernet communication driving component (3132).

6. The system as claimed in claim 5, wherein the diagnosis identifier comprises a diagnosis node identifier, and the parallel diagnosis component (111) comprises an Ethernet transmission analysis component (3112);
the Ethernet transmission analysis component (3112) is configured to analyze the diagnosis request, to acquire the diagnosis node identifier of the diagnosis request; and
the parallel diagnosis component (111) is configured to call the Ethernet transmission analysis component (3112) to analyze the diagnosis request ,in response to receiving the diagnosis request sent by the at least one diagnosis device (12) on the basis of the Ethernet communication driving component (3132), so as to obtain the diagnosis node identifier of the diagnosis request, determine, on the basis of the diagnosis node identifier, the application component (112) corresponding to the diagnosis request, and transmit, in an IPC manner, the diagnosis request to the application component (112) corresponding to the diagnosis request.

7. The system as claimed in claim 1, wherein each application component (112) is further configured to execute at least one of the following steps:
performing security access verification on the received diagnosis request, and transmitting a verification result of the diagnosis request to the parallel diagnosis component (111) in the IPC manner;
recording a Diagnostic Trouble Code (DTC) of the application program running in each application component (112), and maintaining a diagnostic trouble state of the application program running in each application component (112); and
recording a session state between each application component (112) and the parallel diagnosis component (111).

8. The system as claimed in claim 2, wherein the communication driving component (213) comprises a diagnosis message determination component; and
the diagnosis message determination component is configured to determine whether the diagnosis request of the application component (112) sent by the at least one diagnosis device (12) is a request of a diagnosis message type, and transmit the diagnosis request to the parallel diagnosis component (111), in response to the diagnosis request of the application component (112) sent by the at least one diagnosis device (12) being the request of the diagnosis message type.

9. A diagnosis method for a vehicle central controller, comprising:
receiving, on the basis of a parallel diagnosis component (111) deployed in a main process of the vehicle central controller (11), a diagnosis request for diagnosing an application component (112) sent by at least one diagnosis device (12), wherein the diagnosis request carries a diagnosis identifier;
determining, by the parallel diagnosis component (111), the application component (112) corresponding to the diagnosis request on the basis of the diagnosis identifier, and transmitting, in an Inter-Process Communication, IPC, manner, the diagnosis request to the application component (112) corresponding to the diagnosis request;
acquiring a processing result of the diagnosis request by the parallel diagnosis component (111) from the application component (112) in an IPC manner, wherein the processing result of the diagnosis request is obtained by processing the received diagnosis request through the application component (112); and
sending, by the parallel diagnosis component (111), the processing result to the diagnosis device (12) corresponding to the diagnosis request;
wherein the parallel diagnosis component (111) comprises a message processing component (1112) and a routing management component (1113); the message processing component (1112) is connected with the at least one diagnosis device (12); the message processing component (1112) is configured to determine the diagnosis identifier of the diagnosis request, in response to receiving the diagnosis request sent by the at least one diagnosis device, and send the diagnosis identifier to the routing management component (1113); and the routing management component (1113) is configured to determine, on the basis of the diagnosis identifier, the application component (112) corresponding to the diagnosis request, and transmit, in the IPC manner, the diagnosis request to the application component (112) corresponding to the diagnosis request.

10. The method as claimed in claim 9, wherein the vehicle central controller (11) further comprises a communication driving component (213), and the at least one diagnosis device (12) is connected with the parallel diagnosis component (111) through the communication driving component (213).

11. The method as claimed in claim 10, wherein the communication driving component (213) comprises a Controller Area Network (CAN) bus communication driving component (2131), and the at least one diagnosis device (12) is connected with the parallel diagnosis component (111) through the CAN bus communication driving component (2131).

12. The method as claimed in claim 11, wherein the diagnosis identifier comprises a request message identifier, and the parallel diagnosis component (111) comprises a CAN bus transmission analysis component (2111);
analyzing, by the CAN bus transmission analysis component (2111), the diagnosis request, to acquire the request message identifier of the diagnosis request;
calling, by the parallel diagnosis component (111), the CAN bus transmission analysis component (2111) to analyze the diagnosis request, in response to receiving the diagnosis request sent by the at least one diagnosis device (12) on the basis of the CAN bus communication driving component(2131);
determining, on the basis of the request message identifier, the application component (112) corresponding to the diagnosis request; and
transmitting, in an IPC manner, the diagnosis request to the application component (112) corresponding to the diagnosis request.

13. The method as claimed in claim 10, wherein the communication driving component (213) comprises an Ethernet communication driving component (3132); and the at least one diagnosis device (12) is connected with the parallel diagnosis component (111) through the Ethernet communication driving component (3132).

## Patentansprüche

1. Diagnosesystem für eine Fahrzeugzentralsteuerung, umfassend die Fahrzeugzentralsteuerung (11) und mindestens eine Diagnosevorrichtung (12), wobei die Fahrzeugzentralsteuerung (11) eine parallele Diagnosekomponente (111), die in einem Hauptprozess eingesetzt wird, und mindestens eine Anwendungskomponente (112), die in mindestens einem Unterprozess eingesetzt wird, umfasst;
die mindestens eine Diagnosevorrichtung (12) mit der parallelen Diagnosekomponente (111) verbunden ist, und die mindestens eine Diagnosevorrichtung (12) konfiguriert ist, um, an die parallele Diagnosekomponente (111), eine Diagnoseanforderung zum Diagnostizieren der Anwendungskomponente (112) zu senden, wobei die Diagnoseanforderung eine Diagnosekennung mitführt;
die parallele Diagnosekomponente (111) konfiguriert ist, um, als Reaktion auf ein Empfangen der Diagnoseanforderung, die durch die mindestens eine Diagnosevorrichtung (12) gesendet wird, auf der Basis der Diagnosekennung die Anwendungskomponente (112), die der Diagnoseanforderung entspricht, zu bestimmen und, auf eine Weise von Interprozesskommunikation, IPC, die Diagnoseanforderung, an die Anwendungskomponente (112), die der Diagnoseanforderung entspricht, zu übertragen;
jede Anwendungskomponente (112) konfiguriert ist, um die empfangene Diagnoseanforderung zu verarbeiten und ein Verarbeitungsergebnis der Diagnoseanforderung auf die IPC-Weise an die parallele Diagnosekomponente (111) zu übertragen; und
die parallele Diagnosekomponente (111) ferner konfiguriert ist, um das Verarbeitungsergebnis an die Diagnosevorrichtung (12), die der Diagnoseanforderung entspricht, zu senden,
wobei die parallele Diagnosekomponente (111) eine Nachrichtenverarbeitungskomponente (1112) und eine Routing-Verwaltungskomponente (1113) umfasst;
die Nachrichtenverarbeitungskomponente (1112) mit der mindestens einen Diagnosevorrichtung (12) verbunden ist; die Nachrichtenverarbeitungskomponente (1112) konfiguriert ist, um, als Reaktion auf das Empfangen der Diagnoseanforderung, die durch die mindestens eine Diagnosevorrichtung gesendet wird, die Diagnosekennung der Diagnoseanforderung zu bestimmen und die Diagnosekennung an die Routing-Verwaltungskomponente (1113) zu senden; und
die Routing-Verwaltungskomponente (1113) konfiguriert, ist, um, auf der Basis der Diagnosekennung, die Anwendungskomponente (112), die der Diagnoseanforderung entspricht, zu bestimmen und, auf die IPC-Weise, die Diagnoseanforderung an die Anwendungskomponente (112), die der Diagnoseanforderung entspricht, zu übertragen.

2. System nach Anspruch 1, wobei die Fahrzeugzentralsteuerung (11) ferner eine Kommunikationstreiberkomponente (213) umfasst und die mindestens eine Diagnosevorrichtung (12) über die Kommunikationstreiberkomponente (213) mit der parallelen Diagnosekomponente (111) verbunden ist.

3. System nach Anspruch 2, wobei die Kommunikationstreiberkomponente (213) eine Bus-Kommunikationstreiberkomponente (2131) mit Controller Area Network (CAN) umfasst und die mindestens eine Diagnosevorrichtung (12) über die CAN-Bus-Kommunikationstreiberkomponente (2131) mit der parallelen Diagnosekomponente (111) verbunden ist.

4. System nach Anspruch 3, wobei die Diagnosekennung eine Anforderungsnachrichtenkennung umfasst und die parallele Diagnosekomponente (111) eine CAN-Bus-Übertragungsanalysekomponente (2111) umfasst;
die CAN-Bus-Übertragungsanalysekomponente (2111) konfiguriert ist, um die Diagnoseanforderung zu analysieren, um die Anforderungsnachrichtenkennung der Diagnoseanforderung zu erfassen; und
die parallele Diagnosekomponente (111) konfiguriert ist, um, als Reaktion auf das Empfangen der Diagnoseanforderung, die durch die mindestens eine Diagnosevorrichtung (12) auf der Basis der CAN-Bus-Kommunikationstreiberkomponente (2131) gesendet wird, die CAN-Bus-Übertragungsanalysekomponente (2111) aufzurufen, die Diagnoseanforderung zu analysieren, um die Anforderungsnachrichtenkennung der Diagnoseanforderung zu erhalten und, auf der Basis der Anforderungsnachrichtenkennung, die Anwendungskomponente (112), die der Diagnoseanforderung entspricht, zu bestimmen und, auf die IPC-Weise, die Diagnoseanforderung an die Anwendungskomponente (112), die der Diagnoseanforderung entspricht, zu übertragen.

5. System nach Anspruch 2, wobei die Kommunikationstreiberkomponente (213) eine Ethernet-Kommunikationstreiberkomponente (3132) umfasst; und die mindestens eine Diagnosevorrichtung (12) über die Ethernet-Kommunikationstreiberkomponente (3132) mit der parallelen Diagnosekomponente (111) verbunden ist.

6. System nach Anspruch 5, wobei die Diagnosekennung eine Diagnoseknotenkennung umfasst und die parallele Diagnosekomponente (111) eine Ethernet-Übertragungsanalysekomponente (3112) umfasst;
die Ethernet-Übertragungsanalysekomponente (3112) konfiguriert ist, um die Diagnoseanforderung zu analysieren, um die Diagnoseknotenkennung der Diagnoseanforderung zu erfassen; und
die parallele Diagnosekomponente (111) konfiguriert ist, um, als Reaktion auf das Empfangen der Diagnoseanforderung, die durch die mindestens eine Diagnosevorrichtung (12) auf der Basis der Ethernet-Kommunikationstreiberkomponente (3132) gesendet wird, die Ethernet-Übertragungsanalysekomponente (3112) aufzurufen, die Diagnoseanforderung zu analysieren, um die Diagnoseknotenkennung der Diagnoseanforderung zu erhalten, auf der Basis der Diagnoseknotenkennung, die Anwendungskomponente (112), die der Diagnoseanforderung entspricht, zu bestimmen und, auf eine IPC-Weise, die Diagnoseanforderung an die Anwendungskomponente (112), die der Diagnoseanforderung entspricht, zu übertragen.

7. System nach Anspruch 1, wobei jede Anwendungskomponente (112) ferner konfiguriert ist, um mindestens einen der folgenden Schritte auszuführen:
Durchführen einer Sicherheitszugriffsverifizierung an der empfangenen Diagnoseanforderung und Übertragen eines Verifizierungsergebnisses der Diagnoseanforderung an die parallele Diagnosekomponente (111) auf die IPC-Weise;
Aufzeichnen eines Diagnose-Störungscodes (DTC) des Anwendungsprogramms, das in jeder Anwendungskomponente (112) abläuft, und Aufrechterhalten eines Diagnose-Störungszustands des Anwendungsprogramms, das in jeder Anwendungskomponente (112) abläuft; und
Aufzeichnen eines Sitzungszustands zwischen jeder Anwendungskomponente (112) und der parallelen Diagnosekomponente (111).

8. System nach Anspruch 2, wobei die Kommunikationstreiberkomponente (213) eine Diagnosenachrichten-Bestimmungskomponente umfasst; und
die Diagnosenachrichten-Bestimmungskomponente konfiguriert ist, um zu bestimmen, ob die Diagnoseanforderung der Anwendungskomponente (112), die durch die mindestens eine Diagnosevorrichtung (12) gesendet wird, eine Anforderung eines Diagnosenachrichtentyps ist, und, als Reaktion darauf, dass die Diagnoseanforderung der Anwendungskomponente (112), die durch die mindestens eine Diagnosevorrichtung (12) gesendet wird, die Anforderung des Diagnosenachrichtentyps ist, die Diagnoseanforderung an die parallele Diagnosekomponente (111) zu übertragen.

9. Diagnoseverfahren für eine Fahrzeugzentralsteuerung, umfassend:
Empfangen, auf der Basis einer parallelen Diagnosekomponente (111), die in einem Hauptprozess der Fahrzeugzentralsteuerung (11) eingesetzt wird, einer Diagnoseanforderung zum Diagnostizieren einer Anwendungskomponente (112), die durch mindestens eine Diagnosevorrichtung (12) gesendet wird, wobei die Diagnoseanforderung eine Diagnosekennung mitführt;
Bestimmen, durch die parallele Diagnosekomponente (111), der Anwendungskomponente (112), die der Diagnoseanforderung entspricht, auf der Basis der Diagnosekennung, und Übertragen, auf eine Weise von Interprozesskommunikation, IPC, der Diagnoseanforderung an die Anwendungskomponente (112), die der Diagnoseanforderung entspricht;
Erfassen eines Verarbeitungsergebnisses der Diagnoseanforderung durch die parallele Diagnosekomponente (111) von der Anwendungskomponente (112) auf eine IPC-Weise, wobei das Verarbeitungsergebnis der Diagnoseanforderung durch Verarbeiten der empfangenen Diagnoseanforderung über die Anwendungskomponente (112) erhalten wird; und
Senden, durch die parallele Diagnosekomponente (111), des Verarbeitungsergebnisses an die Diagnosevorrichtung (12), die der Diagnoseanforderung entspricht;
wobei die parallele Diagnosekomponente (111) eine Nachrichtenverarbeitungskomponente (1112) und eine Routing-Verwaltungskomponente (1113) umfasst; die Nachrichtenverarbeitungskomponente (1112) mit der mindestens einen Diagnosevorrichtung (12) verbunden ist; die Nachrichtenverarbeitungskomponente (1112) konfiguriert ist, um, als Reaktion auf das Empfangen der Diagnoseanforderung, die durch die mindestens eine Diagnosevorrichtung gesendet wird, die Diagnosekennung der Diagnoseanforderung zu bestimmen und die Diagnosekennung an die Routing-Verwaltungskomponente (1113) zu senden; und die Routing-Verwaltungskomponente (1113) konfiguriert, ist, um, auf der Basis der Diagnosekennung, die Anwendungskomponente (112), die der Diagnoseanforderung entspricht, zu bestimmen und, auf die IPC-Weise, die Diagnoseanforderung an die Anwendungskomponente (112), die der Diagnoseanforderung entspricht, zu übertragen.

10. Verfahren nach Anspruch 9, wobei die Fahrzeugzentralsteuerung (11) ferner eine Kommunikationstreiberkomponente (213) umfasst und die mindestens eine Diagnosevorrichtung (12) über die Kommunikationstreiberkomponente (213) mit der parallelen Diagnosekomponente (111) verbunden ist.

11. Verfahren nach Anspruch 10, wobei die Kommunikationstreiberkomponente (213) eine Bus-Kommunikationstreiberkomponente (2131) mit Controller Area Network (CAN) umfasst und die mindestens eine Diagnosevorrichtung (12) über die CAN-Bus-Kommunikationstreiberkomponente (2131) mit der parallelen Diagnosekomponente (111) verbunden ist.

12. Verfahren nach Anspruch 11, wobei die Diagnosekennung eine Anforderungsnachrichtenkennung umfasst und die parallele Diagnosekomponente (111) eine CAN-Bus-Übertragungsanalysekomponente (2111) umfasst;
Analysieren, durch die CAN-Bus-Übertragungsanalysekomponente (2111), der Diagnoseanforderung, um die Anforderungsnachrichtenkennung der Diagnoseanforderung zu erfassen;
Aufrufen, durch die parallele Diagnosekomponente (111), der CAN-Bus-Übertragungsanalysekomponente (2111), um die Diagnoseanforderung zu analysieren, als Reaktion auf das Empfangen der Diagnoseanforderung, die durch die mindestens einen Diagnosevorrichtung (12) auf der Basis der CAN-Bus-Kommunikationstreiberkomponente (2131) gesendet wird;
Bestimmen, auf der Basis der Anforderungsnachrichtenkennung, der Anwendungskomponente (112), die der Diagnoseanforderung entspricht; und
Übertragen, auf eine IPC-Weise, der Diagnoseanforderung an die Anwendungskomponente (112), die der Diagnoseanforderung entspricht.

13. Verfahren nach Anspruch 10, wobei die Kommunikationstreiberkomponente (213) eine Ethernet-Kommunikationstreiberkomponente (3132) umfasst; und die mindestens eine Diagnosevorrichtung (12) über die Ethernet-Kommunikationstreiberkomponente (3132) mit der parallelen Diagnosekomponente (111) verbunden ist.

## Revendications

1. Système de diagnostic pour un dispositif de commande central de véhicule comprenant le dispositif de commande central de véhicule (11) et au moins un dispositif de diagnostic (12), dans lequel le dispositif de commande central de véhicule (11) comprend un composant de diagnostic en parallèle (111) déployé dans un processus principal, et au moins un composant d'application (112) déployé dans au moins un sous-processus ;
l'au moins un dispositif de diagnostic (12) est connecté au composant de diagnostic en parallèle (111), et l'au moins un dispositif de diagnostic (12) est configuré pour envoyer, au composant de diagnostic en parallèle (111), une demande de diagnostic pour diagnostiquer le composant d'application (112), dans lequel la demande de diagnostic porte un identifiant de diagnostic ;
le composant de diagnostic en parallèle (111) est configuré pour déterminer, sur la base de l'identifiant de diagnostic, le composant d'application (112) correspondant à la demande de diagnostic, en réponse à la réception de la demande de diagnostic envoyée par l'au moins un dispositif de diagnostic (12), et pour transmettre, à la manière d'une communication interprocessus, IPC, la demande de diagnostic au composant d'application (112) correspondant à la demande de diagnostic ;
chaque composant d'application (112) est configuré pour traiter la demande de diagnostic reçue, et pour transmettre un résultat de traitement de la demande de diagnostic au composant de diagnostic en parallèle (111) à la manière IPC ; et
le composant de diagnostic en parallèle (111) est en outre configuré pour envoyer le résultat de traitement au dispositif de diagnostic (12) correspondant à la demande de diagnostic,
dans lequel le composant de diagnostic en parallèle (111) comprend un composant de traitement de message (1112) et un composant de gestion d'acheminement (1113) ;
le composant de traitement de message (1112) est connecté à l'au moins un dispositif de diagnostic (12) ; le composant de traitement de message (1112) est configuré pour déterminer l'identifiant de diagnostic de la demande de diagnostic, en réponse à la réception de la demande de diagnostic envoyée par l'au moins un dispositif de diagnostic, et pour envoyer l'identifiant de diagnostic au composant de gestion d'acheminement (1113) ; et
le composant de gestion d'acheminement (1113) est configuré pour déterminer, sur la base de l'identifiant de diagnostic, le composant d'application (112) correspondant à la demande de diagnostic, et pour transmettre, à la manière IPC, la demande de diagnostic au composant d'application (112) correspondant à la demande de diagnostic.

2. Système selon la revendication 1, dans lequel le dispositif de commande central de véhicule (11) comprend en outre un composant de commande de communication (213), et l'au moins un dispositif de diagnostic (12) est connecté au composant de diagnostic en parallèle (111) par l'intermédiaire du composant de commande de communication (213).

3. Système selon la revendication 2, dans lequel le composant de commande de communication (213) comprend un composant de commande de communication de bus Controller Area Network (CAN) (2131), et l'au moins un dispositif de diagnostic (12) est connecté au composant de diagnostic en parallèle (111) par l'intermédiaire du composant de commande de communication de bus CAN (2131).

4. Système selon la revendication 3, dans lequel l'identifiant de diagnostic comprend un identifiant de message de demande, et le composant de diagnostic en parallèle (111) comprend un composant d'analyse de transmission de bus CAN (2111) ;
le composant d'analyse de transmission de bus CAN (2111) est configuré pour analyser la demande de diagnostic, pour acquérir l'identifiant de message de demande de la demande de diagnostic ; et
le composant de diagnostic en parallèle (111) est configuré pour appeler le composant d'analyse de transmission de bus CAN (2111) pour analyser la demande de diagnostic, en réponse à la réception de la demande de diagnostic envoyée par l'au moins un dispositif de diagnostic (12) sur la base du composant de commande de communication de bus CAN (2131), pour obtenir l'identifiant de message de demande de la demande de diagnostic, et déterminer, sur la base de l'identifiant de message de demande, le composant d'application (112) correspondant à la demande de diagnostic, et transmettre, à la manière IPC, la demande de diagnostic au composant d'application (112) correspondant à la demande de diagnostic.

5. Système selon la revendication 2, dans lequel le composant de commande de communication (213) comprend un composant de commande de communication Ethernet (3132) ; et l'au moins un dispositif de diagnostic (12) est connecté au composant de diagnostic en parallèle (111) par l'intermédiaire du composant de commande de communication Ethernet (3132).

6. Système selon la revendication 5, dans lequel l'identifiant de diagnostic comprend un identifiant de nœud de diagnostic, et le composant de diagnostic en parallèle (111) comprend un composant d'analyse de transmission Ethernet (3112) ;
le composant d'analyse de transmission Ethernet (3112) est configuré pour analyser la demande de diagnostic, pour acquérir l'identifiant de nœud de diagnostic de la demande de diagnostic ; et
le composant de diagnostic en parallèle (111) est configuré pour appeler le composant d'analyse de transmission Ethernet (3112) pour analyser la demande de diagnostic, en réponse à la réception de la demande de diagnostic envoyée par l'au moins un dispositif de diagnostic (12) sur la base du
composant de commande de communication Ethernet (3132), de manière à obtenir l'identifiant de nœud de diagnostic de la demande de diagnostic, déterminer, sur la base de l'identifiant de nœud de diagnostic, le composant d'application (112) correspondant à la demande de diagnostic, et transmettre, à la manière IPC, la demande de diagnostic au composant d'application (112) correspondant à la demande de diagnostic.

7. Système selon la revendication 1, dans lequel chaque composant d'application (112) est en outre configuré pour exécuter au moins l'une des étapes suivantes :
la réalisation d'une vérification d'accès de sécurité sur la demande de diagnostic reçue, et la transmission d'un résultat de vérification de la demande de diagnostic au composant de diagnostic en parallèle (111) à la manière IPC ;
l'enregistrement d'un code d'anomalie de diagnostic (DTC) du programme d'application s'exécutant dans chaque composant d'application (112), et le maintien d'un état d'anomalie de diagnostic du programme d'application s'exécutant dans chaque composant d'application (112) ; et
l'enregistrement d'un état de session entre chaque composant d'application (112) et le composant de diagnostic en parallèle (111).

8. Système selon la revendication 2, dans lequel le composant de commande de communication (213) comprend un composant de détermination de message de diagnostic ; et
le composant de détermination de message de diagnostic est configuré pour déterminer si la demande de diagnostic du composant d'application (112) envoyée par l'au moins un dispositif de diagnostic (12) est une demande d'un type de message de diagnostic, et transmettre la demande de diagnostic au composant de diagnostic en parallèle (111), en réponse au fait que la demande de diagnostic du composant d'application (112) envoyée par l'au moins un dispositif de diagnostic (12) est la demande du type de message de diagnostic.

9. Procédé de diagnostic pour un dispositif de commande central de véhicule, comprenant :
la réception, sur la base d'un composant de diagnostic en parallèle (111) déployé dans un processus principal du dispositif de commande central de véhicule (11), d'une demande de diagnostic pour diagnostiquer un composant d'application (112) envoyée par au moins un dispositif de diagnostic (12), dans lequel la demande de diagnostic porte un identifiant de diagnostic ;
la détermination, par le composant de diagnostic en parallèle (111), du composant d'application (112) correspondant à la demande de diagnostic sur la base de l'identifiant de diagnostic, et la transmission, à la manière d'une communication interprocessus, IPC, de la demande de diagnostic au composant d'application (112) correspondant à la demande de diagnostic ;
l'acquisition d'un résultat de traitement de la demande de diagnostic en par le composant de diagnostic en parallèle (111) à partir du composant d'application (112) d'une manière IPC, le résultat de traitement de la demande de diagnostic étant obtenu en traitant la demande de diagnostic reçue par le biais du composant d'application (112) ; et
l'envoi, par le composant de diagnostic en parallèle (111), du résultat de traitement au dispositif de diagnostic (12) correspondant à la demande de diagnostic ;
dans lequel le composant de diagnostic en parallèle (111) comprend un composant de traitement de message (1112) et un composant de gestion d'acheminement (1113) ; le composant de traitement de message (1112) est connecté à l'au moins un dispositif de diagnostic (12) ; le composant de traitement de message (1112) est configuré pour déterminer l'identifiant de diagnostic de la demande de diagnostic, en réponse à la réception de la demande de diagnostic envoyée par l'au moins un dispositif de diagnostic, et pour envoyer l'identifiant de diagnostic au composant de gestion d'acheminement (1113) ; et le composant de gestion d'acheminement (1113) est configuré pour déterminer, sur la base de l'identifiant de diagnostic, le composant d'application (112) correspondant à la demande de diagnostic, et pour transmettre, à la manière IPC, la demande de diagnostic au composant d'application (112) correspondant à la demande de diagnostic.

10. Procédé selon la revendication 9, dans lequel le dispositif de commande central de véhicule (11) comprend en outre un composant de commande de communication (213), et l'au moins un dispositif de diagnostic (12) est connecté au composant de diagnostic en parallèle (111) par l'intermédiaire du composant de commande de communication (213).

11. Procédé selon la revendication 10, dans lequel le composant de commande de communication (213) comprend un composant de commande de communication de bus Controller Area Network (CAN) (2131), et l'au moins un dispositif de diagnostic (12) est connecté au composant de diagnostic en parallèle (111) par l'intermédiaire du composant de commande de communication de bus CAN (2131).

12. Procédé selon la revendication 11, dans lequel l'identifiant de diagnostic comprend un identifiant de message de demande, et le composant de diagnostic en parallèle (111) comprend un composant d'analyse de transmission de bus CAN (2111) ;
l'analyse, par le composant d'analyse de transmission de bus CAN (2111), de la demande de diagnostic, pour acquérir l'identifiant de message de demande de la demande de diagnostic ;
l'appel, par le composant de diagnostic en parallèle (111), du composant d'analyse de transmission de bus CAN (2111) pour analyser la demande de diagnostic, en réponse à la réception de la demande de diagnostic envoyée par l'au moins un dispositif de diagnostic (12) sur la base du composant de conduite de communication de bus CAN (2131) ;
la détermination, sur la base de l'identifiant de message de demande, du composant d'application (112) correspondant à la demande de diagnostic ; et
la transmission, d'une manière IPC, de la demande de diagnostic au composant d'application (112) correspondant à la demande de diagnostic.

13. Procédé selon la revendication 10, dans lequel le composant de commande de communication (213) comprend un composant de commande de communication Ethernet (3132) ; et l'au moins un dispositif de diagnostic (12) est connecté au composant de diagnostic en parallèle (111) par l'intermédiaire du composant de commande de communication Ethernet (3132).
